# EUROPÄISCHE PATENTSCHRIFT

(11) **EP 4 527 752 B1**
(45) Veröffentlichungstag und Bekanntmachung des Hinweises auf die Patenterteilung: **18.03.2026**
(21) Anmeldenummer: 24201924.8
(22) Anmeldetag: 23.09.2024
(51) Int. Cl.: B65C 9/18, B25J 15/02, B65G 47/90, B65H 19/12, B66C 1/54, B25J 15/10, B25J 15/12, B25J 19/02, B25J 15/00

(54) **GREIFSYSTEM UND VERFAHREN ZUM GREIFEN EINER ETIKETTENROLLE**
GRIPPING SYSTEM AND METHOD FOR GRIPPING A LABEL ROLL
SYSTÈME ET PROCÉDÉ DE PRÉHENSION POUR SAISIR UN ROULEAU D'ÉTIQUETTES

(30) Priorität: 25.09.2023 DE 102023125949
(43) Veröffentlichungstag der Anmeldung: 26.03.2025
(73) Patentinhaber: KRONES AG, 93073 Neutraubling (DE)
(72) Erfinder: WAGNER, Martin, 93073 Neutraubling (DE)
(74) Vertreter: v. Bezold & Partner Patentanwälte - PartG mbB

(56) Entgegenhaltungen:
- WO-A1-2022/224161
- DE-A1- 102021 125 133
- US-A1- 2019 315 587

## Beschreibung

### Technisches Gebiet

Die Erfindung betrifft ein Greifsystem zum Greifen einer Etikettenrolle. Die Erfindung betrifft ferner eine Vorrichtung zum Handhaben einer Etikettenrolle mit einem solchen Greifsystem. Die Erfindung betrifft ferner ein Verfahren zum Betreiben eines solchen Greifsystems oder einer solchen Vorrichtung.

### Technischer Hintergrund

In einer Behälterbehandlungsanlage kann eine Etikettiereinrichtung zum Etikettieren von Behältern umfasst sein. Beispielsweise kann die Etikettiereinrichtung die Behälter mit Etiketten von einer Etikettenrolle (Rolle mit Etikettenmaterial) etikettieren.

Herkömmlich werden die Etikettenrollen von einem Bediener per Hand nachgelegt. Ggf. muss der Benutzer weitere Aufgaben erfüllen, wie bspw. das positionsgerechte Abschneiden des Etikettenbandes, das Aufbringen eines doppelseitigen Klebebands auf das Etikettenband oder das Einbringen des Etikettenbandes in eine automatische Verklebung.

Die DE 10 2021 125 133 A1 beschreibt einen mobilen Roboter, ein Versorgungssystem und ein Verfahren zum Etikettenrollenwechsel an einem Etikettieraggregat zur Etikettierung von Behältern. Der mobile Roboter umfasst demnach eine Fahrzeugeinheit zum Ortswechsel des Roboters und eine Manipulatoreinheit mit einem Mehrachsmanipulator und einem zugehörigen Endeffektor zum Manipulieren von Etikettenrollen. Dadurch, dass der Endeffektor zum tragenden außenumfänglichen Greifen der Etikettenrollen und entleerter Rollenkerne von Etikettenrollen ausgebildet ist, lassen sich ergonomisch problematische Arbeitsschritte beim Nachlegen von Etikettenrollen ausschließlich maschinell und mit großer Präzision sowie in materialschonender Weise bewerkstelligen.

Nachteilig an der Manipulatoreinheit der DE 10 2021 125 133 A1 kann sein, dass die Spannkraft aufgrund der kleinen Zylinder relativ gering ist und keine wirkliche Aufrechterhaltung der Spannkraft offenbart ist. Die Greiferbacken werden nur in Position arretiert. Mit der Manipulatoreinheit ist eine genaue Zentrierung der Etikettenrolle nicht möglich, da bspw. die Greiferbacken mechanisch nicht gekoppelt sind. Die Manipulatoreinheit baut im Durchmesser sehr groß, nämlich größer als ein Durchmesser der Etikettenrolle. Zum Transport der Etikettenrolle von einer Palette auf eine Rollenaufnahme muss ein Wechsel der Spannposition von Innen- auf Außengreifer sowie ein Zwischenablegen der Rolle erfolgen, was sich negativ auf eine Taktzeit und Prozesssicherheit auswirkt. Durch das zeitweise ausschließliche Klemmen der Etikettenrolle am Außenumfang könnte das Etikettenband beschädigt werden, und ein sicherer Halt der Etikettenrolle dabei ist fraglich. Die Manipulatoreinheit kann ein mögliches Teleskopieren der Etikettenrolle nicht verhindern. Außerdem können angebrochene Etikettenrollen mit losem Etikettenband nicht gehandhabt werden.

Die WO 2022/224161 A1 offenbart eine Maschine, die die Merkmale des Oberbegriffs des Anspruchs 1 aufweist, zur Kontrolle der Form einer Rolle eines bahnförmigen Produkts, die eine Aufnahmezone für mindestens eine zu bewertende Rolle, eine Vorrichtung zum Bewegen der mindestens einen Rolle von der Aufnahmezone zu einer Entladezone und eine Vorrichtung zur Bewertung mindestens des Außendurchmessers der Rolle umfasst, die so gestaltet ist, dass sie zwischen der Aufnahmezone und der Entladezone wirkt.

Der Erfindung liegt die Aufgabe zu Grunde, ein verbesserte Technik zum Handhaben von Etikettenrollen zum Bestücken einer Etikettiereinrichtung zu schaffen. Vorzugsweise können zumindest einige der erläuterten Nachteile des Stands der Technik überwunden werden.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft ein (z. B. pneumatisches) Greifsystem zum Greifen einer Etikettenrolle mit einem ringförmigen Rollenkern. Das Greifsystem weist einen, vorzugsweise pneumatischen, Innengreifer, vorzugsweise Innen-Zentrischgreifer, auf, der mehrere (z. B. drei) Innenklemmbacken aufweist, die in einer Umfangsrichtung um eine Mittelachse des Greifsystems herum (z. B. gleichmäßig) verteilt angeordnet und zum Innengreifen der Etikettenrolle an einer Innenumfangsfläche des ringförmigen Rollenkerns radial bezüglich der Mittelachse bewegbar sind. Das Greifsystem weist ferner mindestens einen Abstandssensor (z. B. Ultraschallsensor, Reflexlichtaster, Lasersensor oder kapazitiver Sensor) auf, der zum Erfassen eines Abstands zwischen dem Greifsystem und der Etikettenrolle angeordnet ist.

Vorteilhaft kann das Innengreifen die sicherste und zuverlässigste Methode zum Greifen einer Etikettenrolle für eine dynamische Handhabungsoperation sein. Durch das Spannen am Rollenkern kann eine Beschädigung der Etikettenrolle vermieden werden. Vorteilhaft kann der oder die erfassten Abstände dazu genutzt werden, eine Position der (noch nicht gegriffenen) Etikettenrolle relativ zu dem Greifsystem zu ermitteln. Vorzugsweise kann damit eine Feinpositionierung des Innengreifers relativ zu der Etikettenrolle und/oder dem Rollenkern ermöglicht werden, um die Etikettenrolle besonders sicher greifen zu können. Bei zusätzlicher Kenntnis einer Dicke (Höhe) der zu greifenden Etikettenrolle kann die Feinpositionierung des Innengreifers eine angepasste Eintauchtiefe des Innengreifers in den Rollenkern ermöglichen, wodurch sowohl sehr schmale als auch sehr dicke Etikettenrollen besonders sicher innengegriffen werden können.

Vorzugsweise können die Innenklemmbacken parallel zu der Mittelachse ausgerichtet sein.

In einem Ausführungsbeispiel weist der mindestens eine Abstandssensor mehrere Abstandssensoren auf, die vorzugsweise in einer Umfangsrichtung um die Mittelachse herum (z. B. gleichmäßig) verteilt angeordnet sind, vorzugsweise abwechselnd mit den mehreren Innenklemmbacken. Vorteilhaft können die mehreren Abstandssensoren ermöglichen, dass eine relative Orientierung der Etikettenrolle zu dem Greifsystem ermittelt werden kann. Dadurch kann der Innengreifer für das Innengreifen in eine optimale Ausrichtung relativ zu der Etikettenrolle bewegt werden, nämlich bevorzugt parallel zu dem ringförmigen Rollenkern / koaxial innen von dem ringförmigen Rollenkern.

In einem weiteren Ausführungsbeispiel kann der mindestens eine Abstandssensor parallel zu der Mittelachse ausgerichtet sein. Vorteilhaft kann damit der Abstand parallel zu der Mittelachse erfasst werden.

In einer Ausführungsform sind die mehreren Innenklemmbacken zum gemeinsamen, vorzugsweise synchronen, radialen Bewegen mechanisch miteinander gekoppelt, vorzugsweise mittels eines zwangsgeführten Getriebes, besonders bevorzugt mittels eines zwangsgeführten Keilhakengetriebes. Vorteilhaft kann das gemeinsame, vorzugsweise synchrone, Bewegen ein zentrisches Greifen des Rollenkerns und damit der Etikettenrolle ermöglichen.

In einer weiteren Ausführungsform weisen die mehreren Innenklemmbacken jeweils eine (z. B. gewölbte) Kontaktfläche zum Anlegen an die Innenumfangsfläche des Rollenkerns auf, wobei die Kontaktflächen profiliert, vorzugsweise geriffelt oder gezackt, sind. Vorteilhaft kann eine Profilierung an den Kontaktflächen ermöglichen, dass die Innenklemmbacken v.a. in weiche Papprollenkerne eindrücken können und somit sicher ein Abrutschen des Rollenkerns verhindern können.

In einer weiteren Ausführungsvariante sind die mehreren Innenklemmbacken jeweils elastisch (z. B. mittels einer Feder) radial nach außen bezüglich der Mittelachse vorgespannt. Vorteilhaft kann die elastische Vorspannung der Innenklemmbacken ermöglichen, dass die Innenklemmbacken auch im druckluftlosen Zustand nach außen gespannt werden. Vorzugsweise kann so im Fehlerfall, z. B. bei einem Druckluftausfall, ein sicherer Halt der Etikettenrolle gewährleistet sein.

In einem Ausführungsbeispiel weist der Innengreifer ein, vorzugsweise pneumatisches, Druckregelventil zum Anpassen einer Greifkraft (Spannkraft) des Innengreifers auf, vorzugsweise durch Anpassen einer Gegenkraft oder Unterstützungskraft zu einer (oder der) elastischen Vorspannung der mehreren Innenklemmbacken. Vorteilhaft kann die Anpassung der Greifkraft mittels des Druckregelventils eine Verwendung des Greifsystems als Universalgreifsystem unterstützen, da die Greifkraft an unterschiedlich große und damit schwere Etikettenrollen angepasst werden kann. Insbesondere bei schmalen oder angebrochenen (teilabgewickelten) Etikettenrollen kann somit ein Risiko dafür, dass der Rollenkern durch eine zu hohe Greifkraft verformt und beschädigt wird, verringert werden.

In einem Ausführungsbeispiel weist der Innengreifer ein, vorzugsweise pneumatisches, Rückschlagventil zum Halten einer Greifkraft (Spannkraft) des Innengreifers auf. Vorteilhaft kann im Fehlerfall mittels Rückschlagventils so lange die Greifkraft gehalten werden, bis der Roboter zum Stillstand kommt. Optional kann dann noch die sichere Aufspannung der Etikettenrolle durch die elastische Vorspannung weiter sichergestellt werden, selbst wenn es durch das Rückschlagventil hindurch zu einem schleichenden Druckverlust kommen würde.

Erfindungsgemäß weist das Greifsystem ferner einen, vorzugsweise pneumatischen, Außengreifer mit mehreren (z. B. vier oder sechs) Außenklemmbacken auf, die außen von den mehreren Innenklemmbacken in einer Umfangsrichtung um die Mittelachse herum (z. B. gleichmäßig) verteilt angeordnet und zum Sichern der Etikettenrolle an einer Außenumfangsfläche der Etikettenrolle radial bezüglich der Mittelachse bewegbar sind. Vorteilhaft kann mittels des Außengreifers eine zusätzliche Außenklemmung der Etikettenrollen ermöglicht werden. Vor allem schmale Etikettenrollen können zum Teleskopieren neigen, z. B. falls sie nur am Rollenkern gespannt werden und dynamischen Kräften bei schnellen Roboterbewegungen ausgesetzt sind. Um die Prozesssicherheit zu erhöhen und die Taktzeit zum Rollenwechsel zu vermindern, kann das Greifsystem daher mit dem Außengreifer versehen sein, welcher insbesondere die Handhabung von schmalen Etikettenrollen verbessern kann. Da die Etikettenrolle weiterhin mittels des Innengreifers über den Rollenkern gespannt wird und über den Außengreifer vorzugsweise nur eine vergleichsweise kleine Kraft auf die Etikettenrolle wirkt, kann ein Risiko für eine Beschädigung der Etikettenrolle minimiert werden. Vorteilhaft kann der Außengreifer auch die Handhabung von bereits angebrochenen Etikettenrollen, bei denen das Bandende nicht mehr (z. B. mittels Klebeband) gesichert, sondern lose ist, ermöglicht werden. Vorteilhaft kann somit auch eine Möglichkeit zur automatisierten Sortenumstellung geschaffen werden, da das Greifsystem angebrochene Etikettenrollen sichern und von Rollentellern abnehmen und bspw. zu einem Aufbereitungsplatz transportieren kann.

In einer Ausführungsform sind die mehreren Außenklemmbacken abgerundet und/oder aus einem elastisch eindrückbaren Material und/oder aus einem weicheren Material als die Innenklemmbacken. Vorteilhaft kann eine abgerundete Form der Klemmbacken oder ein weiches und/oder elastisches Material der Außenklemmbacken dazu beitragen, dass eine Beschädigung der Etikettenrolle möglichst vermieden wird.

In einer weiteren Ausführungsform ist eine durch den Außengreifer maximal bewirkbare Greifkraft (Spannkraft) kleiner als eine durch den Innengreifer maximal bewirkbare Greifkraft (Spannkraft). Vorteilhaft kann damit ermöglicht werden, dass die Etikettenrolle außen tatsächlich nur gesichert wird, während das eigentliche Greifen vom Innengreifer durchgeführt wird.

In einer Ausführungsvariante sind die mehreren Außenklemmbacken mit den mehreren Innenklemmbacken zum radialen Mitbewegen bezüglich der Mittelachse mit den mehreren Innenklemmbacken mechanisch gekoppelt, und die Außenklemmbacken sind zusätzlich unabhängig von den mehreren Innenklemmbacken radial bezüglich der Mittelachse bewegbar. Alternativ oder zusätzlich ist der Außengreifer außen an den mehreren Innenklemmbacken befestigt. Alternativ oder zusätzlich sind die mehreren Außenklemmbacken parallel zu der Mittelachse bewegbar, vorzugsweise ein- und ausfahrbar. Vorteilhaft kann durch die mechanische Kopplung und besonders bevorzugt die direkte Befestigung des Außengreifers an den Innenklemmbacken ein direkter Kraftfluss beim Klemmen gewährleistet werden. Der Außengreifer kann somit vorteilhaft besonders steif und leicht ausgeführt werden.

Erfindungsgemäß weisen die mehreren Außenklemmbacken mehrere (z. B. zwei oder drei) erste Außenklemmbacken und mehrere (z. B. zwei oder drei) zweite Außenklemmbacken auf. Die mehreren ersten Außenklemmbacken sind außen von den mehreren Innenklemmbacken in einer Umfangsrichtung um die Mittelachse herum (z. B. gleichmäßig) verteilt angeordnet. Die mehreren zweiten Außenklemmbacken sind außen von den mehreren ersten Außenklemmbacken in einer Umfangsrichtung um die Mittelachse herum (z. B. gleichmäßig) verteilt angeordnet. Vorteilhaft kann eine Konfiguration mit ersten (inneren) Außenklemmbacken und zweiten (äußeren) Außenklemmbacken einen sehr großen Klemmbereich zum Klemmen unterschiedlichster Durchmesser von Etikettenrollen bei einem gleichzeitig kompakten und einfachen Aufbau ermöglichen. Vorzugsweise können von dem Außengreifer somit alle üblichen Etikettenrollendurchmesser bis zu 600 mm außen gesichert werden.

In einem Ausführungsbeispiel weist der Außengreifer mehrere Radial-Hubzylinder auf, die zum radialen Bewegen der mehreren Außenklemmbacken bezüglich der Mittelachse mit den Außenklemmbacken verbunden sind. Vorzugsweise kann je einer der mehreren Radial-Hubzylinder außen an je einer der mehreren Innenklemmbacken befestigt sein. Vorteilhaft kann durch die Verbindung, bevorzugt die direkte Befestigung, der Radial-Hubzylinder außen an den Innenklemmbacken ein direkter Kraftfluss beim Klemmen gewährleistet werden. Wie bereits erwähnt, kann der Außengreifer somit vorteilhaft besonders steif und leicht ausgeführt werden.

In einem weiteren Ausführungsbeispiel weisen die mehreren Radial-Hubzylinder jeweils einen Wegmesssensor auf. Vorteilhaft kann mittels der Wegmesssensoren beim Außenklemmen der Etikettenrolle deren Außendurchmesser überprüft werden. Auch ist es möglich, bei bekanntem Außendurchmesser der Etikettenrolle eine korrekte Positionierung der Außenklemmbacken zu überprüfen. Zudem kann vorteilhaft ein Teleskopieren von besonders schlecht gewickelten Etikettenrollen festgestellt werden, wenn sich der Außendurchmesser der Rolle durch Abrutschen/Abwickeln des Etikettenbands nach unten ändert. Dann kann bspw. eine Warnung ausgegeben und bspw. ein Bedienereingriff angestoßen werden.

In einer Ausführungsform ist je einer der mehreren Radial-Hubzylinder mit je zwei der Außenklemmbacken zum radialen Bewegen dieser zwei Außenklemmbacken (z. B. einer der ersten Außenklemmbacken und einer der zweiten Außenklemmbacken) verbunden. Vorteilhaft kann damit ein Aufbau des Außengreifers vereinfacht und der Außengreifer kompakter gebaut werden.

In einer weiteren Ausführungsform weist der Außengreifer mehrere Axial-Hubzylinder auf, die zum axialen Bewegen der mehreren Außenklemmbacken parallel zu der Mittelachse mit den Außenklemmbacken verbunden sind, wobei vorzugsweise je einer der mehreren Axial-Hubzylinder mit je einer der Außenklemmbacken zum axialen Bewegen dieser einen Außenklemmbacke verbunden ist. Vorteilhaft kann durch das axiale Ein- und Ausfahren ermöglicht werden, dass die Außenklemmbacken eingefahren werden können, wenn sie nicht gebraucht werden, wenn sie bspw. beim Innengreifen stören würden oder wenn sie beim Positionieren des Greifsystems stören würden. Vorteilhaft kann durch das axiale Ein- und Ausfahren auch ermöglicht werden, dass bspw. nur bestimmte Außenklemmbacken, z. B. nur die ersten oder nur die zweiten Außenklemmbacken, in Eingriff mit einer Außenumfangsfläche der Etikettenrolle gelangen.

In einer Ausführungsvariante sind die mehreren Radial-Hubzylinder zum radialen Bewegen der mehreren Axial-Hubzylinder zusammen mit den Außenklemmbacken bezüglich der Mittelachse mit den mehreren Axial-Hubzylindern verbunden. Vorzugsweise kann je einer der mehreren Radial-Hubzylinder mit je zwei der mehreren Axial-Hubzylinder zum radialen Bewegen dieser zwei Axial-Hubzylinder verbunden sein. Alternativ oder zusätzlich sind die mehreren Axial-Hubzylinder zwischen die mehreren Radial-Hubzylinder einerseits und die Außenklemmbacken andererseits geschaltet.

Ein weiterer Aspekt der vorliegenden Offenbarung betrifft eine Vorrichtung zum Handhaben einer Etikettenrolle mit einem ringförmigen Rollenkern. Die Vorrichtung weist ein Greifsystem wie hierin offenbart auf. Die Vorrichtung weist ferner einen, vorzugsweise stationären, Roboter, vorzugsweise Mehrachsroboter, besonders bevorzugt Knickarmroboter, auf, wobei der Roboter das Greifsystem als einen Endeffektor trägt. Die Vorrichtung weist ferner eine Verarbeitungseinrichtung auf, die dazu konfiguriert ist, den Roboter zum (z. B. Fein-) Positionieren des Greifsystems zum Greifen der Etikettenrolle mittels des Innengreifers abhängig von einem von dem mindestens einen Abstandssensor erfassten Abstand zwischen der Etikettenrolle und dem Greifsystem zu betreiben. Optional kann die Verarbeitungseinrichtung ferner dazu konfiguriert sein, den Roboter zum (z. B. Fein-) Positionieren des Greifsystems zum Greifen der Etikettenrolle mittels des Innengreifers ferner in Abhängigkeit von einer erfassten oder vorgegebenen Dicke der Etikettenrolle zu betreiben, vorzugsweise zum Anpassen einer Eintauchtiefe des Innengreifers in den Rollenkern abhängig von der Dicke. Vorteilhaft kann die Vorrichtung die Erzielung der gleichen Vorteile ermöglichen, die bereits unter Bezugnahme auf das Greifsystem erläutert wurden.

In einem Ausführungsbeispiel weist der mindestens eine Abstandssensor mehrere Abstandssensoren auf. Die Verarbeitungseinrichtung ist ferner dazu konfiguriert,
- eine Orientierung der Etikettenrolle relativ zu dem Greifsystem abhängig von den von den mehreren Abstandssensoren erfassten Abständen zu ermitteln, und
- den Roboter zum Ausrichten des Greifsystems zum Greifen der Etikettenrolle mittels des Innengreifers ferner in Abhängigkeit von der ermittelten Ausrichtung zu betreiben, vorzugsweise zum parallelen Ausrichten der mehreren Innenklemmbacken zu dem Rollenkern zum Greifen der Etikettenrolle.

Vorteilhaft können damit, wie bereits erläutert, ein besonders materialschonendes und sicheres Greifen der Etikettenrolle und damit große Dynamiken bei der Handhabung der gegriffenen Etikettenrolle ermöglicht werden, selbst bei einer sehr schmalen Etikettenrolle.

In einem weiteren Ausführungsbeispiel weist das Greifsystem oder der Roboter eine Kamera, vorzugsweise 2D- oder 3D-Kamera, zum Aufnehmen der Etikettenrolle auf, und die Verarbeitungseinrichtung ist ferner dazu konfiguriert:
- eine Position der Etikettenrolle abhängig von einer Aufnahme der Kamera zu ermitteln und den Roboter zum (z. B. Vor-) Positionieren des Greifsystems zum Greifen der Etikettenrolle mittels des Innengreifers abhängig von der ermittelten Position zu betreiben; und/oder
- Positionen mehrerer Etikettenrollen innerhalb eines Rollenstapels abhängig von einer Aufnahme der Kamera zu ermitteln und den Roboter zum (z. B. Vor-) Positionieren des Greifsystems zum Greifen einer jeweils obersten Etikettenrolle des Rollenstapels mittels des Innengreifers abhängig von den ermittelten Positionen zu betreiben.

Vorteilhaft kann die Kamera ein Vorpositionieren des Greifsystems ermöglichen, sodass eine anschließende Feinpositionierung mittels des mindestens einen Abstandsensors möglich wird. Vorteilhaft kann die Kamera auch dazu genutzt werden, dass das Greifsystem so um dessen Mittelachse rotiert wird, dass die Außenklemmbacken so positioniert werden, dass sie in Zwischenräume zwischen den Etikettenrollen eines oder mehrerer Rollenstapel eintauchen können. So kann vorteilhaft eine Außenklemmung zum frühestmöglichen Zeitpunkt erfolgen.

In einer Ausführungsform weist das Greifsystem ferner einen, vorzugsweise pneumatischen, Außengreifer mit mehreren Außenklemmbacken auf, die vorzugsweise außen von den mehreren Innenklemmbacken in einer Umfangsrichtung um die Mittelachse herum (z. B. gleichmäßig) verteilt angeordnet und zum Sichern der Etikettenrolle an einer Außenumfangsfläche der Etikettenrolle radial bezüglich der Mittelachse bewegbar sind. Der Außengreifer kann mehrere Radial-Hubzylinder aufweisen, die zum radialen Bewegen der mehreren Außenklemmbacken bezüglich der Mittelachse mit den Außenklemmbacken verbunden sind. Die mehreren Radial-Hubzylinder weisen jeweils einen Wegmesssensor auf. Die Verarbeitungseinrichtung ist ferner dazu konfiguriert:
- einen Durchmesser einer außen mittels der Außenklemmbacken gesicherten Etikettenrolle abhängig von einer Signalausgabe der Wegmesssensoren zu ermitteln; und optional
- den ermittelten Durchmesser mit einem Soll-Durchmesser der Etikettenrolle zum Erkennen einer korrekten Positionierung der mehreren Außenklemmbacken zu vergleichen; und/oder
- den Durchmesser mehrfach nacheinander bei der gleichen Etikettenrolle zum Erkennen eines Teleskopierens der Etikettenrolle bei einer Verringerung der Durchmesser zu ermitteln.

Ein weiterer Aspekt der vorliegenden Offenbarung betrifft eine Einrichtung zum Etikettieren von Behältern. Die Vorrichtung weist eine (z. B. Rundläufer-) Etikettiereinrichtung mit einem Etikettieraggregat zum Etikettieren der Behälter auf. Die Einrichtung weist ferner eine Vorrichtung zum Handhaben einer Etikettenrolle wie hierin offenbart auf. Der Roboter ist dazu konfiguriert, mittels des Greifsystems automatisch eine mit dem Etikettieraggregat verbundene Rollenaufnahme mit einer Etikettenrolle zu beladen, zum Abrollen der jeweiligen Etikettenrolle zu einem Etikettierband zum Zuführen zu dem mindestens einen Etikettieraggregat zum Etikettieren der Behälter. Vorzugsweise können eine Spannwelle der Rollenaufnahme und die mehreren Innenklemmbacken komplementär zueinander geformt und/oder angeordnet sein, bevorzugt zum Ermöglichen eines Eintauchens der mehreren Innenklemmbacken in Zwischenräume zwischen Spannelementen der Spannwelle bei einem Etikettenrollentransfer.

Ein weiterer Aspekt der vorliegenden Offenbarung betrifft eine Behälterbehandlungsanlage (z. B. zum Temperieren, Herstellen, Reinigen, Beschichten, Prüfen, Abfüllen, Verschließen, Pasteurisieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder HealthCare-Industrie). Die Behälterbehandlungsanlage kann das Greifsystem wie hierin offenbart oder die Vorrichtung wie hierin offenbart aufweisen.

Beispielsweise können die Behälter als Flaschen, Dosen, Kanister, Kartons, Flakons, Tuben usw. ausgeführt sein.

Vorzugsweise kann sich der Begriff "Verarbeitungseinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Ein weiterer Aspekt der vorliegenden Erfindung betrifft ein Verfahren zum Betreiben eines Greifsystems gemäß dem Anspruch 1 oder einer Vorrichtung gemäß dem Anspruch 10, wobei das Verfahren aufweist:
- Erfassen mindestens eines Abstands zwischen dem Greifsystem und einer Etikettenrolle mittels des mindestens einen Abstandssensors;
- (z. B. Fein-) Positionieren und/oder Ausrichten des Innengreifers zu einem ringförmigen Rollenkern der Etikettenrolle in Abhängigkeit von dem mindestens einen erfassten Abstand, vorzugsweise mittels eines Roboters;
- Innengreifen der Etikettenrolle an einer Innenumfangsfläche des Rollenkerns mittels der mehreren Innenklemmbacken des Innengreifers nach dem Positionieren und/oder Ausrichten, vorzugsweise bewirkt durch eine elastische Vorspannung der mehreren Innenklemmbacken; und optional:
- Sichern der innengegriffenen Etikettenrolle an einer Außenumfangsfläche der Etikettenrolle mittels mehrerer Außenklemmbacken eines Außengreifers des Greifsystems; und/oder
- Anpassen einer Greifkraft (Spannkraft) des Innengreifers mittels eines, vorzugsweise pneumatischen, Druckregelventils; und/oder
- Ausrichten des Innengreifers zu einer Spannwelle einer Rollenaufnahme (z. B. verbunden mit einem Etikettieraggregat) bei einem Etikettenrolltransfer zwischen dem Innengreifer und der Spannwelle, vorzugsweise derart, dass die mehreren Innenklemmbacken in Zwischenräume zwischen Spannelementen der Spannwelle eintauchen können.

Das Verfahren ermöglicht die Erzielung der gleichen Vorteile, die bereits unter Bezugnahme auf das Greifsystem erläutert wurden.

Die zuvor beschriebenen bevorzugten Ausführungsformen und Merkmale der Erfindung sind beliebig miteinander kombinierbar, solange der Umfang der unabhängigen Ansprüche nicht verlasst wird.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung gemäß einem Ausführungsbeispiel der vorliegenden Offenbarung;
- Figur 2: eine perspektivische Ansicht eines Greifsystems gemäß einem Ausführungsbeispiel der vorliegenden Offenbarung; und
- Figur 3: eine Seitenansicht des beispielhaften Greifsystems.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

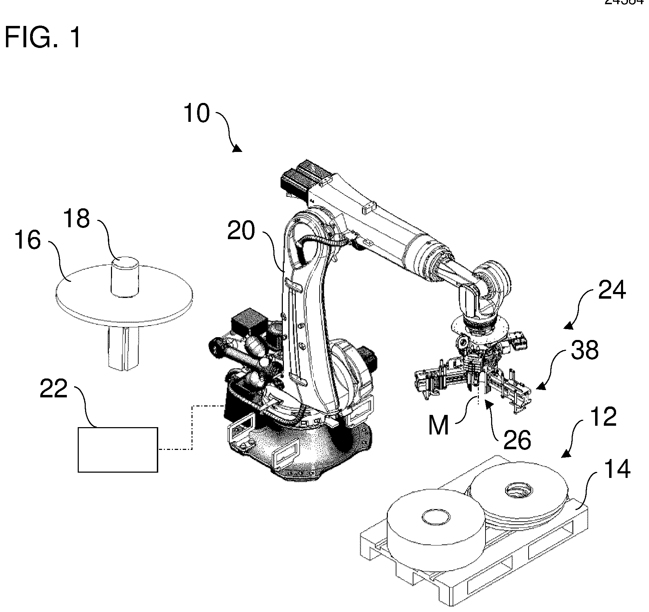

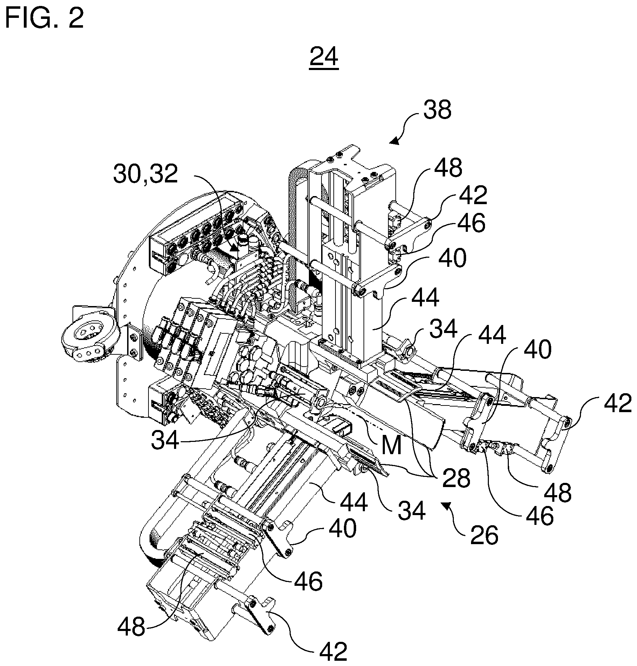

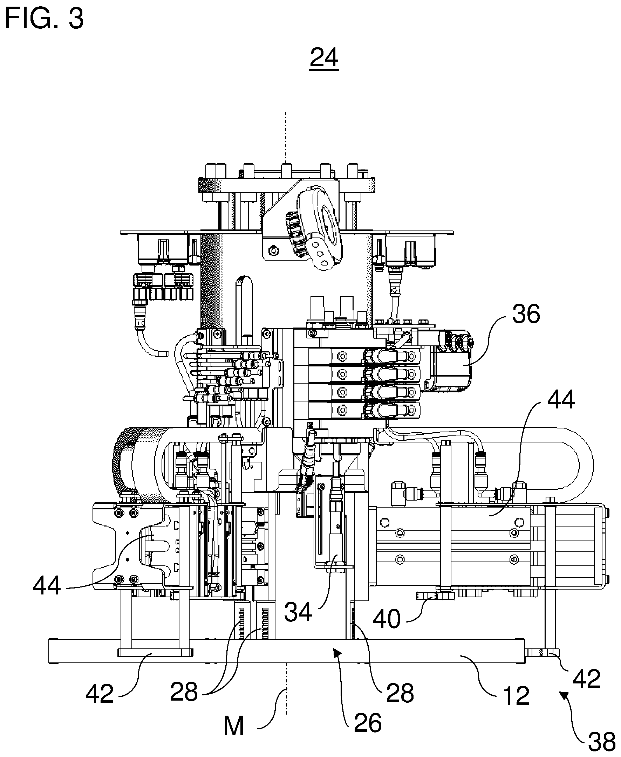

Die Figur 1 zeigt eine Vorrichtung 10 mit einem Roboter 20, einer Verarbeitungseinrichtung 22 (nur schematisch in Figur 1 dargestellt) und einem Greifsystem 24. Die Figuren 2 und 3 zeigen das Greifsystem 24 in größerem Detail. Die Vorrichtung 10 kann bevorzugt in einer Behälterbehandlungsanlage umfasst sein.

Die Vorrichtung 10 ist zum Handhaben einer Etikettenrolle 12 ausgebildet. Die Vorrichtung 10 kann die Etikettenrolle 12 von einer Rollenablage 14 aufnehmen, zu einer Rollenaufnahme 16 bewegen und an die Rollenaufnahme 16 abgegeben. Die Vorrichtung 10 kann auch eine Etikettenrolle 12 von der Rollenaufnahme 16 aufnehmen, zu der Rollenablage 14 bewegen und auf der Rollenablage 14 ablegen.

Die Rollenablage 14 kann eine Palette sein, wie in der Figur 1 dargestellt ist. Alternativ kann die Rollenablage 14 bspw. ein Arbeitstisch sein, auf dem Etikettenrollen 12 abgelegt werden können.

Die Rollenablage 14 kann bspw. manuell von einem Benutzer, zum Beispiel mittels eines Hubwagens oder Gabelstaplers, mit Etikettenrollen 12 nachgefüllt werden. Alternativ oder zusätzlich kann das Nachfüllen der Etikettenrollen an der Rollenablage 14 bspw. automatisiert mittels eines fahrerlosen Transportfahrzeugs (AGV) erfolgen.

Die Rollenaufnahme 16 kann bspw. ein Rollenteller zum Aufnehmen und zum Abrollen der Etikettenrolle 12 sein. Die Rollenaufnahme 16 kann horizontal ausgerichtet sein, wie in Figur 1 dargestellt ist. Alternativ kann die Rollenaufnahme 16 bspw. vertikal ausgerichtet sein.

Bevorzugt kann die Rollenaufnahme 16 eine Spannwelle 18 aufweisen. Mittel der Spannwelle 18 kann eine Etikettenrolle 12 an der Rollenaufnahme 16 festgeklemmt werden.

Die Spannwelle 18 kann vorzugsweise mehrere Spannelemente zum Verspannen einer Etikettenrolle 12 aufweisen. Die Spannelemente können bspw. radial bezüglich einer Mittellängsachse der Spannwelle 18 bewegbar sein, z. B. ein- und ausfahrbar sein. Bevorzugt sind die Spannelemente (z. B. gleich-) verteilt um einen Umfang der Spannwelle 18 herum angeordnet. Die Spannelemente können voneinander beabstandet sein. Vorzugsweise sind die Spannelemente äquidistant zueinander und/oder zu der Mittellängsachse der Spannwelle 18 angeordnet. Die Spannelemente können bspw. als Spannbacken oder Spannleisten ausgeführt sein.

Die Rollenaufnahme 16 kann mit einem Etikettieraggregat einer Etikettiereinrichtung zum Versorgen des Etikettieraggregats mit einem aus einer Etikettenrolle abgerollte Etikettenband verbunden sein (nicht in den Figuren gezeigt). Das Etikettieraggregat kann zur Applikation von Etiketten aus dem Etikettenband auf Behälter ausgebildet sein. Das Etikettieraggregat kann bspw. austauschbar an einer Peripherie der Etikettiereinrichtung an- und abkoppelbar sein, z. B. über einen, vorzugsweise werkzeuglosen, Schnellkoppelmechanismus. Die Etikettiereinrichtung kann mittels eines Antriebs drehbar sein. Vorzugsweise kann die Etikettiereinrichtung als eine Rundläufer- Etikettiereinrichtung mit einem mittels des Antriebs drehbaren Karussell ausgeführt sein. Behälter können beabstandet voneinander an einem Umfang des Karussells in Behandlungsstationen gehalten und mittels des Etikettieraggregats etikettiert werden. Alternativ kann die Etikettiereinrichtung bspw. als eine Linear-Etikettiereinrichtung ausgeführt sein, z. B. mit nur einer Behandlungsstation oder mit mehreren in Reihe nebeneinander und/oder hintereinander angeordneten Behandlungsstationen.

Es ist allerdings auch möglich, dass die Rollenaufnahme 16 bspw. lediglich eine Palette oder ein Arbeitstisch oder ein Förderer ist.

Der Roboter 20 kann das Greifsystem 24 als einen Endeffektor tragen. Der Roboter 52 kann mittels des Greifsystems 24 die Rollenaufnahme 16 automatisch mit einer Etikettenrolle 12 von der Rollenablage 14 beladen.

Bevorzugt ist der Roboter 20 ein Mehrachsroboter, besonders bevorzugt ein Knickarmroboter. Der Knickarmroboter kann bspw. ein 5-Achs-, 6-Achs- oder 7-Achs-Knickarmroboter sein. Andere Robotertypen sind ebenfalls denkbar. Vorzugsweise ist der Roboter 20 ein stationärer Roboter. Es ist allerdings auch möglich, dass der Roboter 20 ein mobiler Roboter ist. Der Roboter 20 kann ein Industrieroboter mit oder ohne Kollaborationsfunktionalität sein.

Die Verarbeitungseinrichtung 22 kann dazu konfiguriert sein, den Roboter 20 und/oder das Greifsystem 24 zu betreiben. Beispielsweise kann die Verarbeitungseinrichtung 22 den Roboter 20 zum Bewegen, zum Positionieren und/oder zum Ausrichten des Greifsystems 24 betreiben. Beispielsweise kann die Verarbeitungseinrichtung 22 das Greifsystem 24 zum Greifen (z. B. Innen- und/oder Außengreifen) einer Etikettenrolle 12 und zum Freigeben einer gegriffenen Etikettenrolle 12 betreiben.

Das Greifsystem 24 ist vorzugsweise ein pneumatisches Greifsystem. Das Greifsystem 24 ist zum Greifen einer Etikettenrolle 12 mit einem ringförmigen Rollenkern ausgebildet. Das Greifsystem 24 weist eine Mittelachse M auf.

Vorzugsweise ist das Greifsystem 24 so dimensioniert und ausgebildet, dass es Etikettenrollen 12 mit einem Durchmesser in einem Bereich zwischen ca. 160 mm und 600 mm greifen kann.

Das Greifsystem 24 weist einen, vorzugsweise pneumatischen, Innengreifer 26 und mehrere Abstandssensoren 34 auf. Das Greifsystem 24 weist noch einen, vorzugsweise pneumatischen, Außengreifer 38 auf.

Vorzugsweise kann der Innengreifer 26 ein Innen-Zentrischgreifer sein. Der Innen-Zentrischgreifer kann selbstzentrierend sein. Der Innen-Zentrischgreifer kann mittig schließen und den ringförmigen Rollenkern der Etikettenrolle 12 innen mittig greifen.

Bevorzugt kann der Innengreifer 26 eine Etikettenrolle 12 durch Spannen / Festklemmen der Etikettenrolle 12 von innen am Rollenkern greifen.

Der Innengreifer 26 weist mehrere Innenklemmbacken 28 auf. Bevorzugt sind exakt zwei oder drei Innenklemmbacken 28 umfasst.

Die Innenklemmbacken 28 können bspw. zylindermantelsegmentförmig sein. Die Innenklemmbacken 28 können sich bspw. länglich erstrecken, vorzugsweise parallel zu der Mittelachse M.

Die Innenklemmbacken 28 sind in einer Umfangsrichtung um die Mittelachse M herum verteilt angeordnet. Die Innenklemmbacken 28 können beabstandet zueinander angeordnet sein. Vorzugsweise sind die Innenklemmbacken 28 äquidistant zueinander und/oder zu der Mittelachse M angeordnet. Bspw. können die Innenklemmbacken 28 bezüglich der Mittelachse M in Winkeln von 360° / Innenklemmbackenanzahl zueinander angeordnet sein.

Bevorzugt kann eine Anordnung der Innenklemmbacken 28 im Wesentlichen komplementär zu einer Anordnung der Spannelemente der Spannwelle 18 (siehe Figur 1) sein. Beim Transfer einer Etikettenrolle 12 zu oder von der Spannwelle 18 können die Innenklemmbacken 28 vorzugsweise so ausgerichtet sein, dass sie jeweils in einen Zwischenraum zwischen zwei Spannelementen der Spannwelle 18 eintauchen.

Die Innenklemmbacken 28 können jeweils eine Kontaktfläche zum Anlegen an die Innenumfangsfläche des Rollenkerns der Etikettenrolle 12 aufweisen. Die Kontaktflächen können bezüglich der Mittelachse M radial nach außen gerichtet sein. Die Kontaktflächen können bevorzugt gewölbt sein. Vorzugsweise sind die Kontaktflächen profiliert, z. B. geriffelt oder gezackt.

Die Innenklemmbacken 28 können bspw. metallische Frästeile oder metallische Schmiedeteile sein.

Die Innenklemmbacken 28 sind zum Innengreifen der Etikettenrolle 12 an einer Innenumfangsfläche des ringförmigen Rollenkerns radial bezüglich der Mittelachse M bewegbar. Eine radiale Bewegung kann bevorzugt mittels elastischer Vorspannung und/oder pneumatischer Druckbeaufschlagung des Innengreifers 26 bewirkt werden.

Beispielsweise kann der Innengreifer 26 eine pneumatische Zylinder-Kolben-Einheit aufweisen, die mit den Innenklemmbacken 28 mechanisch über ein Getriebe gekoppelt ist. Vorzugsweise kann im Zylinder ein elastisches Element zum Vorspannen des Kolbens gegen den Zylinder angeordnet sein.

Alternativ ist jeder andere geeignete Antrieb zum Antreiben der radialen Bewegung der Innenklemmbacken 28 möglich.

Bevorzugt können die Innenklemmbacken 28 mechanisch miteinander gekoppelt sein. Beispielsweise können sich die Innenklemmbacken 28 mittels der mechanischen Kopplung gemeinsam, vorzugsweise synchron, radial bezüglich der Mittelachse M bewegen. Die mechanische Kopplung kann bspw. als ein zwangsgeführtes Getriebe, bevorzugt als ein zwangsgeführtes Keilhakengetriebe, ausgeführt sein.

Bevorzugt sind die Innenklemmbacken 28 jeweils elastisch radial nach außen bezüglich der Mittelachse M vorgespannt. Beispielsweise kann der Innengreifer 26 ein elastisches Element aufweisen. Das elastische Element kann die Innenklemmbacken 28 radial nach außen bezüglich der Mittelachse M vorspannen, vorzugsweise durch elastisches Vorspannen eines Kolbens gegen einen Zylinder des Innengreifers 26. Beispielsweise kann das elastische Element in einem Zylinder des Innengreifers 26 angeordnet sein. Das elastische Element kann bspw. eine Feder, vorzugsweise eine Schraubenfeder sein. Die Schraubenfeder ist bevorzugt koaxial zu der Mittelachse M angeordnet. Vorzugsweise können die Innenklemmbacken 28 im drucklosen Zustand (ohne Druckluftbeaufschlagung des Zylinders des Innengreifers) radial nach außen vorgespannt sein.

Es ist auch möglich, dass der Innengreifer 26 ein, vorzugsweise pneumatisches, Rückschlagventil 30 zum Halten einer Greifkraft des Innengreifers 26 aufweist (siehe Figur 2).

Vorzugsweise weist der Innengreifer 26 eine Funktion zum Anpassen der Greifkraft bzw. Spannkraft auf. Beispielsweise kann der Innengreifer 26 ein Druckregelventil 32 aufweisen. Das Druckregelventil 32 kann ein pneumatisches Druckregelventil sein (siehe Figur 2).

Das Druckregelventil 32 kann die Greifkraft vorzugsweise durch Anpassen einer Gegenkraft zu der durch das elastische Element bewirkten, elastischen Vorspannung der Innenklemmbacken 28 anpassen. Beispielsweise kann so die Spannkraft bei schmalen Etikettenrollen 12 reduziert werden. Das elastische Element zum Vorspannen der Innenklemmbacken 28 kann entsprechend an die schwerstmögliche Etikettenrolle 12 angepasst sein.

Alternativ kann das Druckregelventil 32 die Greifkraft bspw. durch Anpassen einer Unterstützungskraft zu der durch das elastische Element bewirkten elastischen Vorspannung der Innenklemmbacken 28 anpassen. In diesem Fall kann das elastische Element zum Vorspannen der Innenklemmbacken 28 schwächer als im vorherigen Fall ausgelegt sein. Die schwerstmögliche Etikettenrolle 12 kann dann bspw. nur unter geringen dynamischen Kräften bzw. im Stillstand gehalten werden. Im Produktionsbetrieb kann dann entsprechend die Greifkraft durch Druckluftbeaufschlagung des Zylinders des Innengreifers 26 erhöht werden. Diese Druckluftbeaufschlagung kann optional mittels des Druckregelventils 32 an den entsprechenden Etikettenrollentyp angepasst sein.

Bevorzugt kann mittels des Druckregelventil 32 die Greifkraft / Spannkraft des Innengreifers 26 an ein Material des Rollenkerns der Etikettenrolle 12 angepasst werden. Beispielsweise kann die Verarbeitungseinrichtung 22 einen Betrieb (eine Stellung) des Druckregelventils 32 abhängig von einem vorgegeben Material des Rollenkerns anpassen. So kann bspw. ein Rollenkern aus Kunststoff eine größere Greifkraft benötigen als ein Papprollenkern.

Es ist möglich, dass das Druckregelventil 32 manuell oder automatisch einstellbar (justierbar) ist. Beispielsweise kann die Verarbeitungseinrichtung 22 dazu konfiguriert sein, das Druckregelventil 32 abhängig von einer gewünschten Greifkraft des Innengreifers 26 und/oder abhängig von einem vorgegebenen Gewicht der Etikettenrolle 12 und/oder abhängig von einem Material des Rollenkerns der Etikettenrolle 12 einzustellen.

Der mindestens eine Abstandssensor 34 ist zum Erfassen eines Abstands zwischen dem Greifsystem 24 und der Etikettenrolle 12 angeordnet. Bevorzugt kann der mindestens eine Abstandssensor 34 parallel zu der Mittelachse M ausgerichtet sein.

Im Einzelnen kann jeder Abstandssensor 34 bevorzugt einen Abstand zwischen einer dem Greifsystem 24 zugewandten Seite (Oberseite) der Etikettenrolle 12 und dem jeweiligen Abstandssensor 34 erfassen.

Vorzugsweise kann der mindestens eine Abstandssensor 34 sowohl einen Abstand zu dem aufgerollten Etikettenband der Etikettenrolle 12 als auch einen Abstand zu dem Rollenkern der Etikettenrolle 12 erfassen. Da das Etikettenband über den Rollenkern überstehen kann, kann somit bei Berücksichtigung der unterschiedlichen erfassten Abstände bei der Positionierung des Greifsystems 24 mittels der Verarbeitungseinrichtung 22 eine Beschädigung der Etikettenband verhindert werden. Würde hingegen bspw. nur der Abstand zu dem Rollenkern erfasst und berücksichtigt, so bestünde ein Risiko dafür, dass die Innenklemmbacken zu weit in die Etikettenrolle 12 eingefahren werden.

Der mindestens eine Abstandssensor 34 kann bspw. als ein Ultraschallsensor, Reflexlichtaster, ein Lasersensor oder ein kapazitiver Sensor o.Ä. ausgeführt sein.

Bevorzugt sind mehreren Abstandssensoren 34, z. B. exakt zwei oder drei Abstandssensoren 34, umfasst. Die Abstandssensoren 34 können vorzugsweise in einer Umfangsrichtung um die Mittelachse M herum verteilt angeordnet sein. Vorzugsweise können sich die Abstandssensoren 34 und die Innenklemmbacken 28 in einer Umfangsrichtung um die Mittelachse M abwechseln.

Bspw. können die Abstandssensoren 34 äquidistant zu der Mittelachse M und/oder zueinander angeordnet sein. Bspw. können Abstandssensoren 34 bezüglich der Mittelachse M in Winkeln von 360° / Abstandssensorenanzahl zueinander angeordnet sein.

Vorzugsweise kann die Verarbeitungseinrichtung 22 den Roboter 20 zum Positionieren des Greifsystems 24 zum Greifen der Etikettenrolle 12 mittels des Innengreifers 26 abhängig von dem erfassten Abstand oder den erfassten Abständen betreiben. Vorzugsweise kann der Innengreifer 26 so in einem relativ genauen Abstand zur Etikettenrolle 12 positioniert werden.

Optional kann das Positionieren des Greifsystems 24 ferner abhängig von einer Dicke (Höhe) der Etikettenrolle 12 sein. Vorzugsweise kann so eine Eintauchtiefe des Innengreifers 26 in den Rollenkern abhängig von der Dicke der Etikettenrolle 12 angepasst werden. Die Dicke kann bspw. über einen bekannten, erfassten oder vorgegebenen Sortenparameter der Etikettenrolle 12 vorgegeben sein. Alternativ kann die Dicke bspw. mittels einer Kamera 36 erkannt werden (siehe Figur 3).

Vorzugsweise kann durch Berücksichtigung der Dicke die Aufspannlänge entlang der Mittelachse M optimiert oder maximiert werden, ohne dass ein Risiko dafür besteht, dass die Innenklemmbacken 28 über den Rollenkern hinausragen. Beispielsweise kann dadurch auch eine sehr schmale Etikettenrolle 12 von einem Stapel aufgenommen werden, ohne die jeweils darunterliegende Etikettenrolle 12 zu beschädigen oder zu verschieben. Bei einer breiten oder dicken und damit schweren Etikettenrolle 12 können die Innenklemmbacken 28 weiter in den Rollenkern eingefahren werden und so ein sicheres Aufspannen der Etikettenrolle 12 gewährleisten.

Bevorzugt kann das Greifsystem 24 auch eine Ausrichtfunktion aufweisen. Beispielsweise kann die Verarbeitungseinrichtung 22 ferner dazu konfiguriert sein, eine Orientierung der Etikettenrolle 12 relativ zu dem Greifsystem 24 abhängig von den von den mehreren Abstandssensoren 34 erfassten Abständen zu ermitteln. Der Roboter 20 kann dann zum Ausrichten des Greifsystems 24 zum Greifen der Etikettenrolle 12 mittels des Innengreifers 26 ferner in Abhängigkeit von der ermittelten Ausrichtung betrieben werden. Vorzugsweise können die Innenklemmbacken 28 somit parallel zu dem Rollenkern des Etikettenrolle 12 ausgerichtet werden, sodass die Etikettenrolle 12 besonders sicher und zentrisch gegriffen werden kann.

Beispielsweise kann der Abstand zwischen dem Greifsystem 24 und der Etikettenrolle 12 an mehreren, z. B. drei, Stellen erfasst werden. Diese Erfassung kann vorzugsweise durch mehrere, z. B. drei, über den Umfang gleichmäßig angeordnete Abstandssensoren 34 erfolgen. Alternativ kann die Messung über nur einen Abstandssensor 34 erfolgen, der durch den Roboter 20 zu mehreren, z. B. drei, verschiedenen Messpositionen verfahren werden kann.

Die Verarbeitungseinrichtung 22 kann dazu konfiguriert sein, eine Neigung des Greifsystems 24 zu der Etikettenrolle 12 aus dem an den mehreren Stellen erfassten Abstand zu berechnen. Die Verarbeitungseinrichtung 22 kann dazu konfiguriert sein, diese Neigung von dem Roboter 20 durch Anpassen einer Pose des Greifsystems 24 auszugleichen (zu nivellieren).

Die optische Kamera 36 kann ein Teil des Greifsystems 24 sein, wie beispielhaft in Figur 3 dargestellt ist. Alternativ kann die Kamera 36 bspw. direkt von dem Roboter 20 getragen sein. Die Kamera 36 kann bspw. eine 2D- oder 3D-Kamera sein.

Die Kamera 36 ist zum Aufnehmen der Etikettenrolle 12 ausgebildet. Abhängig von einer Aufnahme der Kamera 36 kann die Verarbeitungseinrichtung 22 bspw. eine Position der Etikettenrolle 12 auf der Rollenablage 14 ermitteln und den Roboter zum Positionieren des Greifsystems 24 zum Greifen der Etikettenrolle 12 betreiben. Es ist auch möglich, dass aus einer Aufnahme der Kamera 36 die Positionen mehrerer Etikettenrollen 12 innerhalb eines Rollenstapels ermittelt und die ermittelten Positionen zum Positionieren des Greifsystems 24 berücksichtigt werden.

Beispielsweise kann abhängig von der Aufnahme der Kamera 36 eine Vorpositionierung des Greifsystems 24 relativ zu der Etikettenrolle 12 durchgeführt werden. Zum Feinpositionieren können dann bspw. die von den Abstandssensoren 34 erfassten Abstände berücksichtigt werden.

Es ist auch möglich, dass aus einer (z. B. 3D-) Aufnahme der Kamera 36 ein Abstand und/oder eine Orientierung zwischen dem Greifsystem 24 und der Etikettenrolle 12 ermittelt wird.

Es ist auch möglich, dass die Vorrichtung 10 sich mittels der Abstandssensoren 34 und/oder der Kamera 36 automatisch bezüglich der Rollenaufnahme 16 und/oder der Spannwelle 18 ausrichten kann.

Der Außengreifer 38 kann die bereits innengegriffene Etikettenrolle 12 an einer Außenumfangsfläche der Etikettenrolle 12 sichern. Bevorzugt kann eine durch den Außengreifer 38 maximal bewirkbare Greifkraft kleiner als eine durch den Innengreifer 26 maximal bewirkbare Greifkraft sein.

Der Außengreifer 38 weist mehrere Außenklemmbacken 40, 42 auf, und kann mehrere Radial-Hubzylinder 44 und/oder mehrere Axial-Hubzylinder 46, 48 aufweisen.

Die Außenklemmbacken 40, 42 dienen zum äußeren Sichern der Etikettenrolle. Die Außenklemmbacken 40, 42 sind zum Sichern der Etikettenrolle 12 an einer Außenumfangsfläche der Etikettenrolle 12 radial bezüglich der Mittelachse M bewegbar.

Die Außenklemmbacken 40, 42 können bevorzugt zum materialschonenden Außenklemmen der Etikettenrolle 12 ausgeführt sein. Beispielsweise können die Außenklemmbacken 40, 42 abgerundet sein. Die Außenklemmbacken 40, 42 können aus einem elastisch eindrückbaren Material sein. Die Außenklemmbacken 40, 42 können aus einem weicheren Material als die Innenklemmbacken 28 sein.

Die Außenklemmbacken 40, 42 können bspw. T-förmig oder stabförmig sein. Bevorzugt können die Außenklemmbacken 40, 42 radial hin zu der Mittelachse M ausgerichtet sein.

Die Außenklemmbacken 40, 42 sind außen von den Innenklemmbacken 28 in einer Umfangsrichtung um die Mittelachse M herum verteilt angeordnet. Mehrere erste (innere) Außenklemmbacken 40 und mehrere zweite (äußere) Außenklemmbacken 42 sind umfasst.

Die ersten Außenklemmbacken 40 sind außen von den Innenklemmbacken 28 in einer Umfangsrichtung um die Mittelachse M herum verteilt angeordnet, vorzugsweise äquidistant zueinander und/oder zu der Mittelachse M. Bspw. können die ersten Außenklemmbacken 40 bezüglich der Mittelachse M in Winkeln von 360° / Erste-Außenklemmbackenanzahl zueinander angeordnet sein.

Die zweiten Außenklemmbacken 42 sind außen von den ersten Außenklemmbacken 40 in einer Umfangsrichtung um die Mittelachse M herum verteilt angeordnet, vorzugsweise äquidistant zueinander und/oder zu der Mittelachse M. Bspw. können die zweiten Außenklemmbacken 42 bezüglich der Mittelachse M in Winkeln von 360° / Zweite-Außenklemmbackenanzahl zueinander angeordnet sein.

Die ersten und zweiten Außenklemmbacken 40, 42 können zusammen mit ihren Hubzylindern 44 und ggf. 46, 48 einen sehr großen Klemmbereich ermöglichen. Die ersten Außenklemmbacken 40 können Etikettenrollen 12 mit einem kleineren Durchmesser außen sichern als die Etikettenrollen 12, die die zweiten Außenklemmbacken 42 außen sichern können.

Beispielsweise können die ersten Außenklemmbacken 40 Etikettenrollen 12 mit einem Durchmesser zwischen ca. 160 mm und 380 mm außen sichern. Die zweiten Außenklemmbacken 42 können beispielsweise Etikettenrollen 12 mit einem Durchmesser zwischen ca. 380 und 600 mm außen sichern.

Die Radial-Hubzylinder 44 dienen zum Aufbringen der Klemmkraft auf die Außenumfangsfläche der Etikettenrolle 12 über die Außenklemmbacken 40, 42.

Im Einzelnen können die Radial-Hubzylinder 44 mit den Außenklemmbacken 40, 42 verbunden sein und diese radial bezüglich der Mittelachse M bewegen. Bevorzugt kann je einer der Radial-Hubzylinder 44 mit jeweils einer der ersten Außenklemmbacken 40 und einer der zweiten Außenklemmbacken 42 zum radialen Bewegen dieser zwei Außenklemmbacken 40, 42 verbunden sein.

Der Außengreifer 38 kann außen an den mehreren Innenklemmbacken 28 befestigt, vorzugsweise verschraubt, sein. Beispielsweise kann je einer der Radial-Hubzylinder 44 außen an je einer der Innenklemmbacken 28 befestigt, vorzugsweise verschraubt, sein, z. B. stirnseitig. Damit können die Außenklemmbacken 40, 42 mit den Innenklemmbacken 28 zum radialen Mitbewegen bezüglich der Mittelachse M mit den Innenklemmbacken 28 mechanisch gekoppelt sein. Mittels Ein- und Ausfahren der Radial-Hubzylinder 44 können die Außenklemmbacken 40, 42 dann zusätzlich unabhängig von den mehreren Innenklemmbacken 28 radial bezüglich der Mittelachse M bewegbar sein.

Bevorzugt können die Außenklemmbacken 40, 42 auch parallel zu der Mittelachse M bewegbar, vorzugsweise ein- und ausfahrbar, sein. Im Einzelnen können die Axial-Hubzylinder 46, 48 mit den Außenklemmbacken 40, 42 verbunden sein und die Außenklemmbacken 40, 42 parallel zu der Mittelachse M bewegen. Vorzugsweise ist je einer der Axial-Hubzylinder 46, 48 mit je einer der Außenklemmbacken 40, 42 zum parallelen Bewegen dieser Außenklemmbacke 40, 42 zu der Mittelachse M verbunden.

Bevorzugt sind mehrere erste (innere) Axial-Hubzylinder 46 und mehrere zweite (äußere) Axial-Hubzylinder 48 umfasst.

Die ersten Axial-Hubzylinder 46 können radial innen von den zweiten Axial-Hubzylindern 48 bezüglich der Mittelachse M angeordnet sein. Die ersten Axial-Hubzylinder 46 können in einer Umfangsrichtung um die Mittelachse M herum verteilt angeordnet sein, vorzugsweise äquidistant zueinander und/oder zu der Mittelachse M. Die zweiten Axial-Hubzylinder 28 können in einer Umfangsrichtung um die Mittelachse M herum verteilt angeordnet sein, vorzugsweise äquidistant zueinander und/oder zu der Mittelachse M.

Die ersten Axial-Hubzylinder 46 können mit den ersten Außenklemmbacken 40 zum axialen Bewegen der ersten Außenklemmbacken 40 parallel zu der Mittelachse M verbunden sein. Die zweiten Axial-Hubzylinder 48 können mit den zweiten Außenklemmbacken 42 zum axialen Bewegen der zweiten Außenklemmbacken 42 parallel zu der Mittelachse M verbunden sein.

Beim Ein- und Ausfahren der Axial-Hubzylinder 46, 48 können die Außenklemmbacken 40, 42 vorzugsweise an jeweils mindestens einer Führungssäule geführt sein.

Die Axial-Hubzylinder 46, 48 können zwischen die mehreren Radial-Hubzylinder 44 und die Außenklemmbacken 40, 42 geschaltet sein. Bevorzugt können die mehreren Radial-Hubzylinder 44 zum radialen Bewegen der Axial-Hubzylinder 46, 48 zusammen mit den Außenklemmbacken 40, 42 bezüglich der Mittelachse M mit den Axial-Hubzylinder 46, 48 verbunden sein.

Beispielsweise kann je einer der Radial-Hubzylinder 44 mit je zwei der Axial-Hubzylinder 46, 48 (z. B. einer der ersten Axial-Hubzylinder 46 und einer der zweiten Axial-Hubzylinder 48) zum radialen Bewegen dieser zwei Axial-Hubzylinder 46, 48 verbunden sein. Bevorzugt können an einem Radial-Hubzylinder 44 jeweils zwei Axial-Hubzylinder 46, 48 sitzen.

Ein Verfahren zum Handhaben der Etikettenrolle 12 kann bspw. die folgenden Schritte aufweisen.

Zum Aufnehmen einer Etikettenrolle 12 kann die Etikettenrolle 12 zunächst an einer Innenumfangsfläche des Rollenkerns mittels der Innenklemmbacken 28 des Innengreifers 26 gegriffen werden. Danach kann die innengegriffene Etikettenrolle 12 an einer Außenumfangsfläche der Etikettenrolle 12 mittels der mehreren Außenklemmbacken 40 oder 42 gesichert werden. Zum Außensichern können die Außenklemmbacken 40 oder 42 zunächst mittels der Axial-Hubzylinder 46 oder 48 ausgefahren werden. Dann können die Außenklemmbacken 40 oder 42 mittels der Radial-Hubzylinder 44 radial nach innen zu der Mittelachse M verfahren werden, bis eine gewünschte Außenklemmung an der Außenumfangsfläche der Etikettenrolle 12 erreicht ist.

Bevorzugt kann der Außengreifer 38 so ausgeführt sein, dass im eingefahrenen Zustand der Axial-Hubzylinder 46, 48 eine durch die Außenklemmbacken 40, 42 bewirkte Störkontur kleiner ist als ein Außendurchmesser einer Etikettenrolle von 550 - 600 mm ist.

Vorzugsweise können die Radial-Hubzylinder 44 jeweils einen, vorzugsweise analogen, Wegmesssensor aufweisen. Die Verarbeitungseinrichtung 22 kann abhängig von einer Signalausgabe der Wegmesssensoren beispielsweise einen Durchmesser einer außen mittels der Außenklemmbacken 40 oder 42 gesicherten Etikettenrolle 12 ermitteln.

Vorzugsweise kann der ermittelte Durchmesser mit einem Soll-Durchmesser der Etikettenrolle 12 zum Erkennen einer korrekten Positionierung der mehreren Außenklemmbacken 40, 42 verglichen werden.

Es ist auch möglich, dass der Durchmesser mehrfach nacheinander bei der gleichen Etikettenrolle 12 ermittelt wird, zum Erkennen eines (ungewünschten) Teleskopierens der Etikettenrolle 12 bei einer Verringerung der Durchmesser.

Die Erfindung ist nicht auf die vorstehend beschriebenen bevorzugten Ausführungsbeispiele beschränkt. Vielmehr ist eine Vielzahl von Varianten und Abwandlungen möglich, ohne den Schutzumfang der Ansprüche zu verlassen.

Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung zum Handhaben von Etikettenrollen
- 12: Etikettenrolle
- 14: Rollenablage
- 16: Rollenaufnahme
- 18: Spannwelle
- 20: Roboter
- 22: Verarbeitungseinrichtung
- 24: Greifsystem
- 26: Innengreifer
- 28: Innenklemmbacke
- 30: Rückschlagventil
- 32: Druckregelventil
- 34: Abstandssensor
- 36: Kamera
- 38: Außengreifer
- 40: Außenklemmbacke
- 42: Außenklemmbacke
- 44: Radial-Hubzylinder
- 46: Axial-Hubzylinder
- 48: Axial-Hubzylinder

- M: Mittelachse

## Patentansprüche

1. Greifsystem (24) zum Greifen einer Etikettenrolle (12) mit einem ringförmigen Rollenkern, wobei das Greifsystem (24) aufweist:
einen, vorzugsweise pneumatischen, Innengreifer (26), vorzugsweise Innen-Zentrischgreifer, wobei der Innengreifer (26) mehrere Innenklemmbacken (28) aufweist, die in einer Umfangsrichtung um eine Mittelachse (M) des Greifsystems (24) herum verteilt angeordnet und zum Innengreifen der Etikettenrolle (12) an einer Innenumfangsfläche des ringförmigen Rollenkerns radial bezüglich der Mittelachse (M) bewegbar sind; und
mindestens einen Abstandssensor (34), der zum Erfassen eines Abstands zwischen dem Greifsystem (24) und der Etikettenrolle (12) angeordnet ist,
wobei:
das Greifsystem (24) ferner einen, vorzugsweise pneumatischen, Außengreifer (38) mit mehreren Außenklemmbacken (40, 42) aufweist, die außen von den mehreren Innenklemmbacken (28) in einer Umfangsrichtung um die Mittelachse (M) herum verteilt angeordnet und zum Sichern der Etikettenrolle (12) an einer Außenumfangsfläche der Etikettenrolle (12) radial bezüglich der Mittelachse (M) bewegbar sind,
**dadurch gekennzeichnet, dass**:
die mehreren Außenklemmbacken (40, 42) mehrere erste Außenklemmbacken (40) und mehrere zweite Außenklemmbacken (42) aufweisen,
die mehreren ersten Außenklemmbacken (40) außen von den mehreren Innenklemmbacken (28) in einer Umfangsrichtung um die Mittelachse (M) herum verteilt angeordnet sind, und
die mehreren zweiten Außenklemmbacken (42) außen von den mehreren ersten Außenklemmbacken (40) in einer Umfangsrichtung um die Mittelachse (M) herum verteilt angeordnet sind.

2. Greifsystem (24) nach Anspruch 1, wobei:
der mindestens eine Abstandssensor (34) mehrere Abstandssensoren (34) aufweist, die in einer Umfangsrichtung um die Mittelachse (M) herum verteilt angeordnet sind, vorzugsweise abwechselnd mit den mehreren Innenklemmbacken (28); und/oder
der mindestens eine Abstandssensor (34) parallel zu der Mittelachse (M) ausgerichtet ist.

3. Greifsystem (24) nach Anspruch 1 oder Anspruch 2, wobei:
die mehreren Innenklemmbacken (28) zum gemeinsamen, vorzugsweise synchronen, radialen Bewegen mechanisch miteinander gekoppelt sind, vorzugsweise mittels eines zwangsgeführten Getriebes, besonders bevorzugt mittels eines zwangsgeführten Keilhakengetriebes; und/oder
die mehreren Innenklemmbacken (28) jeweils eine Kontaktfläche zum Anlegen an die Innenumfangsfläche des Rollenkerns aufweisen, wobei die Kontaktflächen profiliert, vorzugsweise geriffelt oder gezackt, sind.

4. Greifsystem (24) nach einem der vorherigen Ansprüche, wobei:
die mehreren Innenklemmbacken (28) jeweils elastisch radial nach außen bezüglich der Mittelachse (M) vorgespannt sind; und/oder
der Innengreifer (26) ein, vorzugsweise pneumatisches, Druckregelventil (32) zum Anpassen einer Greifkraft des Innengreifers (26) aufweist, vorzugsweise durch Anpassen einer Gegenkraft oder Unterstützungskraft zu einer elastischen Vorspannung der mehreren Innenklemmbacken (28); und/oder
der Innengreifer (26) ein, vorzugsweise pneumatisches, Rückschlagventil (30) zum Halten einer Greifkraft des Innengreifers (26) aufweist.

5. Greifsystem (24) nach einem der vorherigen Ansprüche, wobei:
- die mehreren Außenklemmbacken (40, 42) abgerundet sind und/oder aus einem elastisch eindrückbaren Material sind und/oder aus einem weicheren Material als die Innenklemmbacken (28) sind; und/oder
- eine durch den Außengreifer (38) maximal bewirkbare Greifkraft kleiner als eine durch den Innengreifer (26) maximal bewirkbare Greifkraft ist.

6. Greifsystem (24) nach einem der vorherigen Ansprüche, wobei:
die mehreren Außenklemmbacken (40, 42) mit den mehreren Innenklemmbacken (28) zum radialen Mitbewegen bezüglich der Mittelachse (M) mit den mehreren Innenklemmbacken (28) mechanisch gekoppelt sind und die Außenklemmbacken (40, 42) zusätzlich unabhängig von den mehreren Innenklemmbacken (28) radial bezüglich der Mittelachse (M) bewegbar sind; und/oder
der Außengreifer (38) außen an den mehreren Innenklemmbacken (28) befestigt ist; und/oder
die mehreren Außenklemmbacken (40, 42) parallel zu der Mittelachse (M) bewegbar, vorzugsweise ein- und ausfahrbar, sind.

7. Greifsystem (24) nach einem der vorherigen Ansprüche, wobei:
der Außengreifer (38) mehrere Radial-Hubzylinder (44) aufweist, die zum radialen Bewegen der mehreren Außenklemmbacken (40, 42) bezüglich der Mittelachse (M) mit den Außenklemmbacken (40, 42) verbunden sind, wobei vorzugsweise:
- je einer der mehreren Radial-Hubzylinder (44) außen an je einer der mehreren Innenklemmbacken (28) befestigt ist; und/oder
- die mehreren Radial-Hubzylinder (44) jeweils einen Wegmesssensor aufweisen; und/oder
- je einer der mehreren Radial-Hubzylinder (44) mit je zwei der Außenklemmbacken (40, 42) zum radialen Bewegen dieser zwei Außenklemmbacken (40, 42) verbunden ist.

8. Greifsystem (24) nach einem der vorherigen Ansprüche, wobei:
der Außengreifer (38) mehrere Axial-Hubzylinder (46, 48) aufweist, die zum axialen Bewegen der mehreren Außenklemmbacken (40, 42) parallel zu der Mittelachse (M) mit den Außenklemmbacken (40, 42) verbunden sind, wobei vorzugsweise je einer der mehreren Axial-Hubzylinder (46, 48) mit je einer der Außenklemmbacken (40, 42) zum axialen Bewegen dieser einen Außenklemmbacke (40, 42) verbunden ist.

9. Greifsystem (24) nach Anspruch 7 und Anspruch 8, wobei:
die mehreren Radial-Hubzylinder (44) zum radialen Bewegen der mehreren Axial-Hubzylinder (46, 48) zusammen mit den Außenklemmbacken (40, 42) bezüglich der Mittelachse (M) mit den mehreren Axial-Hubzylindern (46, 48) verbunden sind, wobei vorzugsweise:
- je einer der mehreren Radial-Hubzylinder (44) mit je zwei der mehreren Axial-Hubzylinder (46, 48) zum radialen Bewegen dieser zwei Axial-Hubzylinder (46, 48) verbunden ist; und/oder
- die mehreren Axial-Hubzylinder (46, 48) zwischen die mehreren Radial-Hubzylinder (44) und die Außenklemmbacken (40, 42) geschaltet sind.

10. Vorrichtung (10) zum Handhaben einer Etikettenrolle (12) mit einem ringförmigen Rollenkern, wobei die Vorrichtung (10) aufweist:
ein Greifsystem (24) nach einem der vorherigen Ansprüche;
einen, vorzugsweise stationären, Roboter (20), vorzugsweise Mehrachsroboter, besonders bevorzugt Knickarmroboter, wobei der Roboter (20) das Greifsystem (24) als einen Endeffektor trägt; und
eine Verarbeitungseinrichtung (22), die dazu konfiguriert ist, den Roboter (20) zum Positionieren des Greifsystems (24) zum Greifen der Etikettenrolle (12) mittels des Innengreifers (26) abhängig von einem von dem mindestens einen Abstandssensor (34) erfassten Abstand zwischen der Etikettenrolle (12) und dem Greifsystem (24) zu betreiben; und optional
die Verarbeitungseinrichtung (22) ferner dazu konfiguriert ist, den Roboter (20) zum Positionieren des Greifsystems (24) zum Greifen der Etikettenrolle (12) mittels des Innengreifers (26) ferner in Abhängigkeit von einer erfassten oder vorgegebenen Dicke der Etikettenrolle (12) zu betreiben, vorzugsweise zum Anpassen einer Eintauchtiefe des Innengreifers (26) in den Rollenkern abhängig von der Dicke.

11. Vorrichtung (10) nach Anspruch 10, wobei:
der mindestens eine Abstandssensor (34) mehrere Abstandssensoren (34) aufweist; und
die Verarbeitungseinrichtung (22) ferner dazu konfiguriert ist,
- eine Orientierung der Etikettenrolle (12) relativ zu dem Greifsystem (24) abhängig von den von den mehreren Abstandssensoren (34) erfassten Abständen zu ermitteln, und
- den Roboter (20) zum Ausrichten des Greifsystems (24) zum Greifen der Etikettenrolle (12) mittels des Innengreifers (26) ferner in Abhängigkeit von der ermittelten Ausrichtung zu betreiben, vorzugsweise zum parallelen Ausrichten der mehreren Innenklemmbacken (28) zu dem Rollenkern zum Greifen der Etikettenrolle (12).

12. Vorrichtung (10) nach Anspruch 10 oder Anspruch 11, wobei:
das Greifsystem (24) oder der Roboter (20) eine Kamera (36), vorzugsweise 2D- oder 3D-Kamera, zum Aufnehmen der Etikettenrolle (12) aufweist, und
die Verarbeitungseinrichtung (22) ferner dazu konfiguriert ist:
- eine Position der Etikettenrolle (12) abhängig von einer Aufnahme der Kamera (36) zu ermitteln und den Roboter (20) zum Positionieren des Greifsystems (24) zum Greifen der Etikettenrolle (12) mittels des Innengreifers (26) abhängig von der ermittelten Position zu betreiben; und/oder
- Positionen mehrerer Etikettenrollen (12) innerhalb eines Rollenstapels abhängig von einer Aufnahme der Kamera (36) zu ermitteln und den Roboter (20) zum Positionieren des Greifsystems (24) zum Greifen einer jeweils obersten Etikettenrolle (12) des Rollenstapels mittels des Innengreifers (26) abhängig von den ermittelten Positionen zu betreiben.

13. Vorrichtung (10) nach einem der Ansprüche 10 bis 12, wobei:
das Greifsystem (24) ferner einen, vorzugsweise pneumatischen, Außengreifer (38) mit mehreren Außenklemmbacken (40, 42) aufweist, die außen von den mehreren Innenklemmbacken (28) in einer Umfangsrichtung um die Mittelachse (M) herum verteilt angeordnet und zum Sichern der Etikettenrolle (12) an einer Außenumfangsfläche der Etikettenrolle (12) radial bezüglich der Mittelachse (M) bewegbar sind,
der Außengreifer (38) mehrere Radial-Hubzylinder (44) aufweist, die zum radialen Bewegen der mehreren Außenklemmbacken (40, 42) bezüglich der Mittelachse (M) mit den Außenklemmbacken (40, 42) verbunden sind,
die mehreren Radial-Hubzylinder (44) jeweils einen Wegmesssensor aufweisen,
und
die Verarbeitungseinrichtung (22) ferner dazu konfiguriert ist:
- einen Durchmesser einer außen mittels der Außenklemmbacken (40, 42) gesicherten Etikettenrolle (12) abhängig von einer Signalausgabe der Wegmesssensoren zu ermitteln; und optional
- den ermittelten Durchmesser mit einem Soll-Durchmesser der Etikettenrolle (12) zum Erkennen einer korrekten Positionierung der mehreren Außenklemmbacken (40, 42) zu vergleichen; und/oder
- den Durchmesser mehrfach nacheinander bei der gleichen Etikettenrolle (12) zum Erkennen eines Teleskopierens der Etikettenrolle (12) bei einer Verringerung der Durchmesser zu ermitteln.

14. Verfahren zum Betreiben eines Greifsystems (24) nach einem der Ansprüche 1 bis 9 oder einer Vorrichtung (10) nach einem der Ansprüche 10 bis 13, wobei das Verfahren aufweist:
Erfassen mindestens eines Abstands zwischen dem Greifsystem (24) und einer Etikettenrolle (12) mittels des mindestens einen Abstandssensors (34);
Positionieren und/oder Ausrichten des Innengreifers (26) zu einem ringförmigen Rollenkern der Etikettenrolle (12) in Abhängigkeit von dem mindestens einen erfassten Abstand, vorzugsweise mittels eines Roboters (20);
Innengreifen der Etikettenrolle (12) an einer Innenumfangsfläche des Rollenkerns mittels der mehreren Innenklemmbacken (28) des Innengreifers (26) nach dem Positionieren und/oder Ausrichten, vorzugsweise bewirkt durch eine elastische Vorspannung der mehreren Innenklemmbacken (28); und optional:
Sichern der innengegriffenen Etikettenrolle (12) an einer Außenumfangsfläche der Etikettenrolle (12) mittels der mehreren Außenklemmbacken (40, 42) des Außengreifers (38) des Greifsystems (24); und/oder
Anpassen einer Greifkraft des Innengreifers (26) mittels eines, vorzugsweise pneumatischen, Druckregelventils (32); und/oder
Ausrichten des Innengreifers (26) zu einer Spannwelle (18) einer Rollenaufnahme (16) bei einem Etikettenrolltransfer zwischen dem Innengreifer (26) und der Spannwelle (18), vorzugsweise derart, dass die mehreren Innenklemmbacken (28) in Zwischenräume zwischen Spannelementen der Spannwelle (18) eintauchen können.

## Claims

1. A gripping system (24) for gripping a label roll (12) having an annular roll core, wherein the gripping system (24) has:
a, preferably pneumatic, inner gripper (26), preferably an inner centric gripper, wherein the inner gripper (26) has a plurality of inner clamping jaws (28) which are arranged distributed in a circumferential direction around a central axis (M) of the gripping system (24) and are movable radially with respect to the central axis (M) for gripping the label roll (12) on an inner circumferential face of the annular roll core; and
at least one distance sensor (34), which is arranged for detecting a distance between the gripping system (24) and the label roll (12),
wherein:
the gripping system (24) further has a, preferably pneumatic, outer gripper (38) with a plurality of outer clamping jaws (40, 42), which are arranged on the outside of the plurality of inner clamping jaws (28) in a circumferential direction around the central axis (M) and are movable radially with respect to the central axis (M) for securing the label roll (12) on an outer circumferential face of the label roll (12),
**characterized in that**:
the plurality of outer clamping jaws (40, 42) have a plurality of first outer clamping jaws (40) and a plurality of second outer clamping jaws (42),
the plurality of first outer clamping jaws (40) are arranged externally of the plurality of inner clamping jaws (28) in a circumferential direction around the central axis (M), and
the plurality of second outer clamping jaws (42) are arranged on the outside of the plurality of first outer clamping jaws (40) in a circumferential direction around the central axis (M).

2. The gripping system (24) according to claim 1, wherein:
the at least one distance sensor (34) has a plurality of distance sensors (34) which are arranged distributed in a circumferential direction around the central axis (M), preferably alternately with the plurality of inner clamping jaws (28); and/or
the at least one distance sensor (34) is aligned parallel to the central axis (M).

3. The gripping system (24) according to claim 1 or claim 2, wherein:
the plurality of inner clamping jaws (28) are mechanically coupled to one another for joint, preferably synchronous, radial movement, preferably by means of a positively driven transmission, particularly preferably by means of a positively driven wedge-hook transmission; and/or
the plurality of inner clamping jaws (28) each have a contact face for contacting the inner circumferential face of the roller core, wherein the contact faces are profiled, preferably corrugated or serrated.

4. The gripping system (24) according to any of the preceding claims, wherein:
the plurality of inner clamping jaws (28) are each elastically biased radially outwards with respect to the central axis (M); and/or
the inner gripper (26) has a, preferably pneumatic, pressure control valve (32) for adjusting a gripping force of the inner gripper (26), preferably by adjusting a counterforce or supporting force to an elastic bias of the plurality of inner clamping jaws (28); and/or
the inner gripper (26) has a, preferably pneumatic, non-return valve (30) for holding a gripping force of the inner gripper (26).

5. The gripping system (24) according to any of the preceding claims, wherein:
- the plurality of outer clamping jaws (40, 42) are rounded and/or are made of an elastically compressible material and/or are made of a softer material than the inner clamping jaws (28); and/or
- the maximum gripping force that can be exerted by the outer gripper (38) is less than the maximum gripping force that can be exerted by the inner gripper (26).

6. The gripping system (24) according to any of the preceding claims, wherein:
the plurality of outer clamping jaws (40, 42) are mechanically coupled to the plurality of inner clamping jaws (28) for radial movement with respect to the central axis (M) with the plurality of inner clamping jaws (28) and the outer clamping jaws (40, 42) are additionally movable radially with respect to the central axis (M) independently of the plurality of inner clamping jaws (28); and/or
the outer gripper (38) is mounted externally on the plurality of inner clamping jaws (28); and/or
the plurality of outer clamping jaws (40, 42) are movable parallel to the central axis (M), preferably retractable and extendable.

7. The gripping system (24) according to any of the preceding claims, wherein:
the outer gripper (38) has a plurality of radial lift cylinders (44) which are connected to the outer clamping jaws (40, 42) for radially moving the plurality of outer clamping jaws (40, 42) with respect to the central axis (M), wherein preferably:
- one each of the plurality of radial lift cylinders (44) is mounted externally on each of the plurality of internal clamping jaws (28); and/or
- the plurality of radial lift cylinders (44) each have a displacement sensor; and/or
- one each of the plurality of radial lift cylinders (44) is connected to two each of the outer clamping jaws (40, 42) for the radial movement of these two outer clamping jaws (40, 42).

8. The gripping system (24) according to any of the preceding claims, wherein:
the outer gripper (38) has a plurality of axial lift cylinders (46, 48) which are connected to the outer clamping jaws (40, 42) for axially moving the plurality of outer clamping jaws (40, 42) parallel to the central axis (M), wherein preferably one each of the plurality of axial lift cylinders (46, 48) is connected to each of the outer clamping jaws (40, 42) for axially moving this one outer clamping jaw (40, 42).

9. The gripping system (24) according to claim 7 and claim 8, wherein:
the plurality of radial lift cylinders (44) are connected to the plurality of axial lift cylinders (46, 48) for radially moving the plurality of axial lift cylinders (46, 48) together with the outer clamping jaws (40, 42) with respect to the central axis (M), wherein preferably:
- one each of the plurality of radial lift cylinders (44) is connected to two each of the plurality of axial lift cylinders (46, 48) for radially moving these two axial lift cylinders (46, 48); and/or
- the multiple axial lift cylinders (46, 48) are connected between the plurality of radial lift cylinders (44) and the outer clamping jaws (40, 42).

10. An apparatus (10) for handling a label roll (12) having an annular roll core, wherein the apparatus (10) has:
a gripping system (24) according to any of the preceding claims;
a, preferably stationary, robot (20), preferably multi-axis robot, particularly preferably articulated arm robot, wherein the robot (20) carries the gripping system (24) as an end effector; and
a processing device (22) configured to operate the robot (20) for positioning the gripping system (24) for gripping the label roll (12) by means of the inner gripper (26) depending on a distance between the label roll (12) and the gripping system (24) detected by the at least one distance sensor (34); and optionally
the processing device (22) is further configured to operate the robot (20) for positioning the gripping system (24) for gripping the label roll (12) by means of the inner gripper (26) further in dependence on a detected or predetermined thickness of the label roll (12), preferably for adapting an immersion depth of the inner gripper (26) into the roll core depending on the thickness.

11. The apparatus (10) according to claim 10, wherein:
the at least one distance sensor (34) has a plurality of distance sensors (34); and
the processing device (22) is further configured to
- determine an orientation of the label roll (12) relative to the gripping system (24) depending on the distances detected by the plurality of distance sensors (34), and
- operate the robot (20) for aligning the gripping system (24) for gripping the label roll (12) by means of the inner gripper (26) furthermore in dependence on the determined alignment, preferably for aligning the plurality of inner clamping jaws (28) parallel to the roll core for gripping the label roll (12).

12. The apparatus (10) according to claim 10 or claim 11, wherein:
the gripping system (24) or the robot (20) has a camera (36), preferably a 2D or 3D camera, for recording the label roll (12), and
the processing device (22) is further configured to:
- determine a position of the label roll (12) depending on a recording of the camera (36) and to operate the robot (20) for positioning the gripping system (24) for gripping the label roll (12) by means of the inner gripper (26) depending on the determined position; and/or
- determine positions of a plurality of label rolls (12) within a roll stack depending on a recording of the camera (36) and to operate the robot (20) for positioning the gripper system (24) for gripping a respective uppermost label roll (12) of the roll stack by means of the inner gripper (26) depending on the determined positions.

13. The apparatus (10) according to any of claims 10 to 12, wherein:
the gripping system (24) further has a, preferably pneumatic, outer gripper (38) with a plurality of outer clamping jaws (40, 42), which are arranged on the outside of the plurality of inner clamping jaws (28) in a circumferential direction around the central axis (M) and are movable radially with respect to the central axis (M) for securing the label roll (12) on an outer circumferential face of the label roll (12),
the outer gripper (38) has a plurality of radial lift cylinders (44) which are connected to the outer clamping jaws (40, 42) for radially moving the plurality of outer clamping jaws (40, 42) with respect to the central axis (M),
the plurality of radial lift cylinders (44) each have a displacement sensor, and
the processing device (22) is further configured to:
- determine a diameter of a label roll (12) secured on the outside by means of the outer clamping jaws (40, 42) depending on a signal output of the displacement measuring sensors; and optionally
- compare the determined diameter with a nominal diameter of the label roll (12) to detect correct positioning of the multiple outer clamping jaws (40, 42); and/or
- determine the diameter several times in succession for the same label roll (12) to detect telescoping of the label roll (12) when the diameter is reduced.

14. A method of operating a gripping system (24) according to any of claims 1 to 9 or an apparatus (10) according to any of claims 10 to 13, wherein the method has:
detecting at least one distance between the gripping system (24) and a label roll (12) by means of the at least one distance sensor (34);
positioning and/or aligning the inner gripper (26) to an annular roll core of the label roll (12) as a function of the at least one detected distance, preferably by means of a robot (20);
innerly gripping the label roll (12) on an inner circumferential face of the roll core by means of the plurality of inner clamping jaws (28) of the inner gripper (26) after positioning and/or aligning, preferably effected by an elastic pretension of the plurality of inner clamping jaws (28); and optionally:
securing the internally gripped label roll (12) to an outer circumferential face of the label roll (12) by means of the plurality of outer clamping jaws (40, 42) of the outer gripper (38) of the gripping system (24); and/or
adjusting a gripping force of the inner gripper (26) by means of a, preferably pneumatic, pressure control valve (32); and/or
aligning the inner gripper (26) with a clamping shaft (18) of a roll receptacle (16) during a label roll transfer between the inner gripper (26) and the clamping shaft (18), preferably in such a way that the plurality of inner clamping jaws (28) can penetrate into spaces between clamping elements of the clamping shaft (18).

## Revendications

1. Système de saisie (24) pour la saisie d'un rouleau d'étiquettes (12) comportant un noyau de rouleau annulaire, dans lequel le système de saisie (24) présente :
une pince intérieure (26), de préférence pneumatique, de préférence une pince centrée intérieure, dans lequel la pince intérieure (26) présente plusieurs mâchoires de serrage intérieures (28) qui sont réparties dans une direction circonférentielle autour d'un axe central (M) du système de saisie (24) et qui sont mobiles radialement par rapport à l'axe central (M) pour la saisie intérieure du rouleau d'étiquettes (12) sur une surface circonférentielle intérieure du noyau de rouleau annulaire ; et
au moins un capteur de distance (34) disposé pour détecter une distance entre le système de saisie (24) et le rouleau d'étiquettes (12),
dans lequel :
le système de saisie (24) présente en outre une pince extérieure (38), de préférence pneumatique, comportant plusieurs mâchoires de serrage extérieures (40, 42) qui sont réparties à l'extérieur des mâchoires de serrage intérieures (28) dans une direction circonférentielle autour de l'axe central (M) et qui sont mobiles radialement par rapport à l'axe central (M) pour le blocage du rouleau d'étiquettes (12) sur une surface circonférentielle extérieure du rouleau d'étiquettes (12),
**caractérisé en ce que :**
les mâchoires de serrage extérieures (40, 42) présentent plusieurs premières mâchoires de serrage extérieures (40) et plusieurs secondes mâchoires de serrage extérieures (42),
les premières mâchoires de serrage extérieures (40) sont réparties à l'extérieur des mâchoires de serrage intérieures (28) dans une direction circonférentielle autour de l'axe central (M), et
les secondes mâchoires de serrage extérieures (42) sont réparties à l'extérieur des premières mâchoires de serrage extérieures (40) dans une direction circonférentielle autour de l'axe central (M).

2. Système de saisie (24) selon la revendication 1, dans lequel :
l'au moins un capteur de distance (34) présente plusieurs capteurs de distance (34) qui sont répartis dans une direction circonférentielle autour de l'axe central (M), de préférence en alternance avec les mâchoires de serrage intérieures (28) ; et/ou
l'au moins un capteur de distance (34) est orienté parallèlement à l'axe central (M).

3. Système de saisie (24) selon la revendication 1 ou la revendication 2, dans lequel :
les mâchoires de serrage intérieures (28) sont accouplées mécaniquement entre elles pour le déplacement radial commun, de préférence synchrone, de préférence au moyen d'un engrenage à guidage forcé, de manière particulièrement préférée au moyen d'un engrenage à crochet à clavette à guidage forcé ; et/ou
les mâchoires de serrage intérieures (28) présentent respectivement une surface de contact permettant l'application sur la surface circonférentielle intérieure du noyau de rouleau, dans lequel les surfaces de contact sont profilées, de préférence striées ou dentelées.

4. Système de saisie (24) selon l'une des revendications précédentes, dans lequel :
les mâchoires de serrage intérieures (28) sont respectivement élastiquement précontraintes radialement vers l'extérieur par rapport à l'axe central (M) ; et/ou
la pince intérieure (26) présente une soupape de régulation de pression (32), de préférence pneumatique, permettant l'adaptation d'une force de saisie de la pince intérieure (26), de préférence en adaptant une force antagoniste ou une force d'assistance à une précontrainte élastique des mâchoires de serrage intérieures (28) ; et/ou
la pince intérieure (26) présente une soupape antiretour (30), de préférence pneumatique, permettant le maintien d'une force de saisie de la pince intérieure (26).

5. Système de saisie (24) selon l'une des revendications précédentes, dans lequel :
- les mâchoires de serrage extérieures (40, 42) sont arrondies et/ou sont faites d'un matériau pouvant être introduit élastiquement et/ou sont faites d'un matériau plus souple que les mâchoires de serrage intérieures (28) ; et/ou
- une force de saisie pouvant être exercée au maximum par la pince extérieure (38) est inférieure à une force de saisie pouvant être exercée au maximum par la pince intérieure (26).

6. Système de saisie (24) selon l'une des revendications précédentes, dans lequel :
les mâchoires de serrage extérieures (40, 42) sont accouplées mécaniquement aux mâchoires de serrage intérieures (28) pour le déplacement radial par rapport à l'axe central (M) avec les mâchoires de serrage intérieures (28) et les mâchoires de serrage extérieures (40, 42) sont en outre mobiles radialement par rapport à l'axe central (M) indépendamment des mâchoires de serrage intérieures (28) ; et/ou
la pince extérieure (38) est fixée à l'extérieur des mâchoires de serrage intérieures (28) ; et/ou
les mâchoires de serrage extérieures (40, 42) sont mobiles, de préférence rétractables et déployables, parallèlement à l'axe central (M).

7. Système de saisie (24) selon l'une des revendications précédentes, dans lequel :
la pince extérieure (38) présente plusieurs vérins de levage radiaux (44) reliés aux mâchoires de serrage extérieures (40, 42) pour le déplacement radial des mâchoires de serrage extérieures (40, 42) par rapport à l'axe central (M), dans lequel de préférence :
- chacun des vérins de levage radiaux (44) est fixé à l'extérieur de chacune des mâchoires de serrage intérieures (28) ; et/ou
- les vérins de levage radiaux (44) présentent respectivement un capteur de mesure de déplacement ; et/ou
- chacun des vérins de levage radiaux (44) est relié à deux des mâchoires de serrage extérieures (40, 42) pour le déplacement radial desdites deux mâchoires de serrage extérieures (40, 42).

8. Système de saisie (24) selon l'une des revendications précédentes, dans lequel :
la pince extérieure (38) présente plusieurs vérins de levage axiaux (46, 48) qui sont reliés aux mâchoires de serrage extérieures (40, 42) pour le déplacement axial des mâchoires de serrage extérieures (40, 42) parallèlement à l'axe central (M), dans lequel de préférence chacun des vérins de levage axiaux (46, 48) est relié à chacune des mâchoires de serrage extérieures (40, 42) pour le déplacement axial de ladite mâchoire de serrage extérieure (40, 42).

9. Système de saisie (24) selon la revendication 7 et la revendication 8, dans lequel :
les vérins de levage radiaux (44) sont reliés aux vérins de levage axiaux (46, 48) pour le déplacement radial des vérins de levage axiaux (46, 48) conjointement avec les mâchoires de serrage extérieures (40, 42) par rapport à l'axe central (M), dans lequel de préférence :
- chacun des vérins de levage radiaux (44) est relié à deux des vérins de levage axiaux (46, 48) pour le déplacement radial desdits deux vérins de levage axiaux (46, 48) ; et/ou
- les vérins de levage axiaux (46, 48) sont intercalés entre les vérins de levage radiaux (44) et les mâchoires de serrage extérieures (40, 42).

10. Dispositif (10) pour la manipulation d'un rouleau d'étiquettes (12) comportant un noyau de rouleau annulaire, dans lequel le dispositif (10) présente :
un système de saisie (24) selon l'une des revendications précédentes ;
un robot (20), de préférence stationnaire, de préférence un robot à axes multiples, de manière particulièrement préférée un robot à bras articulé, dans lequel le robot (20) porte le système de saisie (24) en tant qu'effecteur terminal ; et
un appareil de traitement (22) configuré pour faire fonctionner le robot (20) pour positionner le système de saisie (24) pour la saisie du rouleau d'étiquettes (12) au moyen de la pince intérieure (26) en fonction d'une distance entre le rouleau d'étiquettes (12) et le système de saisie (24) détectée par l'au moins un capteur de distance (34) ; et éventuellement
l'appareil de traitement (22) est en outre configuré pour faire fonctionner le robot (20) pour positionner le système de saisie (24) pour la saisie du rouleau d'étiquettes (12) au moyen de la pince intérieure (26), en outre en fonction d'une épaisseur détectée ou prédéfinie du rouleau d'étiquettes (12), de préférence pour ajuster une profondeur d'immersion de la pince intérieure (26) dans le noyau de rouleau en fonction de l'épaisseur.

11. Dispositif (10) selon la revendication 10, dans lequel :
l'au moins un capteur de distance (34) présente plusieurs capteurs de distance (34) ; et
l'appareil de traitement (22) est en outre configuré pour
- déterminer une orientation du rouleau d'étiquettes (12) par rapport au système de saisie (24) en fonction des distances détectées par les capteurs de distance (34), et
- faire fonctionner le robot (20) pour orienter le système de saisie (24) pour la saisie du rouleau d'étiquettes (12) au moyen de la pince intérieure (26), en outre en fonction de l'orientation déterminée, de préférence pour orienter les mâchoires de serrage intérieures (28) parallèlement au noyau de rouleau pour la saisie du rouleau d'étiquettes (12).

12. Dispositif (10) selon la revendication 10 ou la revendication 11, dans lequel :
le système de saisie (24) ou le robot (20) présente une caméra (36), de préférence une caméra 2D ou 3D, pour la capture du rouleau d'étiquettes (12), et
l'appareil de traitement (22) est en outre configuré pour :
- déterminer une position du rouleau d'étiquettes (12) en fonction d'une capture de la caméra (36) et faire fonctionner le robot (20) pour positionner le système de saisie (24) pour la saisie du rouleau d'étiquettes (12) au moyen de la pince intérieure (26) en fonction de la position déterminée ; et/ou
- positionner plusieurs rouleaux d'étiquettes (12) à l'intérieur d'une pile de rouleaux en fonction d'une capture de la caméra (36) et faire fonctionner le robot (20) pour positionner le système de saisie (24) pour la saisie d'un rouleau d'étiquettes (12) respectivement le plus haut de la pile de rouleaux au moyen de la pince intérieure (26) en fonction des positions déterminées.

13. Dispositif (10) selon l'une des revendications 10 à 12, dans lequel :
le système de saisie (24) présente en outre une pince extérieure (38), de préférence pneumatique, comportant plusieurs mâchoires de serrage extérieures (40, 42) qui sont réparties à l'extérieur des mâchoires de serrage intérieures (28) dans une direction circonférentielle autour de l'axe central (M) et qui sont mobiles radialement par rapport à l'axe central (M) pour le blocage du rouleau d'étiquettes (12) sur une surface circonférentielle extérieure du rouleau d'étiquettes (12),
la pince extérieure (38) présente plusieurs vérins de levage radiaux (44) reliés aux mâchoires de serrage extérieures (40, 42) pour le déplacement radial des mâchoires de serrage extérieures (40, 42) par rapport à l'axe central (M),
les vérins de levage radiaux (44) présentent respectivement un capteur de mesure de déplacement, et
l'appareil de traitement (22) est en outre configuré pour :
- déterminer un diamètre d'un rouleau d'étiquettes (12) fixé extérieurement au moyen des mâchoires de serrage extérieures (40, 42) en fonction d'une sortie de signal des capteurs de mesure de déplacement ; et éventuellement
- comparer le diamètre déterminé avec un diamètre de consigne du rouleau d'étiquettes (12) pour détecter un positionnement correct des mâchoires de serrage extérieures (40, 42) ; et/ou
- déterminer le diamètre plusieurs fois de suite pour le même rouleau d'étiquettes (12) pour détecter un télescopage du rouleau d'étiquettes (12) lors d'une réduction des diamètres.

14. Procédé permettant de faire fonctionner un système de saisie (24) selon l'une des revendications 1 à 9 ou d'un dispositif (10) selon l'une des revendications 10 à 13, dans lequel le procédé présente :
la détection d'au moins une distance entre le système de saisie (24) et un rouleau d'étiquettes (12) au moyen de l'au moins un capteur de distance (34) ;
le positionnement et/ou l'orientation de la pince intérieure (26) par rapport à un noyau de rouleau annulaire du rouleau d'étiquettes (12) en fonction de l'au moins une distance détectée, de préférence au moyen d'un robot (20) ;
la saisie intérieure du rouleau d'étiquettes (12) sur une surface circonférentielle intérieure du noyau de rouleau au moyen des mâchoires de serrage intérieures (28) de la pince intérieure (26) après le positionnement et/ou l'orientation, de préférence provoquée par une précontrainte élastique des mâchoires de serrage intérieures (28) ; et éventuellement :
la fixation du rouleau d'étiquettes (12) à saisie intérieure sur une surface circonférentielle extérieure du rouleau d'étiquettes (12) au moyen des mâchoires de serrage extérieures (40, 42) de la pince extérieure (38) du système de saisie (24) ; et/ou
l'adaptation d'une force de saisie de la pince intérieure (26) au moyen d'une soupape de régulation de pression (32), de préférence pneumatique ; et/ou
l'orientation de la pince intérieure (26) par rapport à un arbre de serrage (18) d'un logement pour rouleau (16) lors d'un transfert de rouleau d'étiquettes entre la pince intérieure (26) et l'arbre de serrage (18), de préférence de telle sorte que les mâchoires de serrage intérieures (28) peuvent s'immerger dans des espaces intermédiaires entre des éléments de serrage de l'arbre de serrage (18).
